# EUROPEAN PATENT SPECIFICATION

(11) **EP 3 444 033 B1**
(45) Date of publication and mention of the grant of the patent: **08.01.2020**
(21) Application number: 17186921.7
(22) Date of filing: 18.08.2017
(51) Int. Cl.: B01L 3/00, G01N 35/10, G01N 33/50

(54) **CARTRIDGE FOR CHEMICAL OR BIOLOGICAL ASSAYS**
KARTUSCHE FÜR CHEMISCHE ODER BIOLOGISCHE ASSAYS
CARTOUCHE POUR DES DOSAGES CHIMIQUES OU BIOLOGIQUES

(43) Date of publication of application: 20.02.2019
(73) Proprietor: CTC Analytics AG, 4222 Zwingen (CH)
(72) Inventor: YANEZ, Antonio Lorenzo, 1024 Ecublens (CH); MOUCHET, Marc, 1007 Lausanne (CH); RODONI, Michele, 1796 Couragevaux (CH); JERMANN, Thomas, 4244 Röschenz (CH); ZUMBACH, Melchior, 5600 Lenzburg (CH)
(74) Representative: Keller & Partner Patentanwälte AG

(56) References cited:
- AU-B2- 2012 202 574
- US-A- 4 090 850
- US-A- 4 704 255
- US-A- 4 902 481
- US-A- 6 083 761
- US-A1- 2009 088 336
- Ctc Analytics Ag: "The new Generation PAL RSI and PAL RTC", , 1 March 2014 (2014-03-01), XP055449261, CTC Analytics AG Industriestrasse 20 CH-4222 Zwingen Retrieved from the Internet: URL:http://www.palsystem.com [retrieved on 2018-02-08]

## Description

### Technical Field

The invention relates to a cartridge for carrying out chemical or biological assays as well as a method for emptying reaction wells of such a cartridge from liquid.

### Background Art

In the healthcare industry, diagnostic testing is essential for properly diagnosing medical issues. Accuracy and precision are necessary to provide proper diagnoses. In order to provide convenience, diagnostic systems have been created to analyse samples in laboratories, clinics, hospitals, etc. with accuracy and precision.

As such diagnostic systems usually necessitate different solutions, such as reagents, wash solutions, buffers, etc. a multiplicity of bottles filled with these solutions have to be connected to the diagnostic systems and the systems programmed correctly such that the appropriate liquid is drawn to carry out the test. Further, as diagnostic systems are able to carry out a multitude of different tests, such as for example immunological assays of the ELISA (enzyme-linked immunosorbent assay) type. Each different test may require a different, specific set of solutions. Therefore, great care has to be taken by an operator to always connect the right set of solutions to a diagnostic system in order for the system to be able to carry out a specific desired test with the necessary accuracy and reliability.

To reduce the risk in connection with the use of wrong solutions, it was proposed to provide all solutions necessary to carry out a test or assay within a cartridge.

For example, WO 2013/173524 (Wellstat Diagnostics LLC) discloses diagnostic systems comprising diagnostic instruments and cartridges, wherein the samples are delivered to the cartridges, processed within the cartridges, tested within the cartridges and results delivered by the instrument. The cartridges are configured to store liquid and dry reagents as well as all waste materials from the diagnostic test for proper waste disposal, i.e. the cartridges contain all necessary reagents and materials for carrying out the diagnostic test situated in various designated portions of the cartridge, such as compartments, wells or channels. The cartridges may have a body and a cover mating together as well as a mount for a sample collection tube and a separate reservoir for waste. The diagnostic systems may generally be used to perform a diagnostic test whereby a sample is introduced into a cartridge, the cartridge is introduced into the instrument, the sample is mixed with at least one reagent stored in the cartridge and a detectable complex is analysed using an electrochemiluminescence detection apparatus of the diagnostic instrument.

EP 2 205 968 (Theranos Inc.) describes a cartridge for automated detection of an analyte in a body fluid sample, said cartridge comprising an array of addressable assay units configured to run a chemical reaction that yields a detectable signal indicative of the presence or absence of an analyte, an array of addressable reagent units, each reagent unit being calibrated in reference to a corresponding assay unit, said assay unit being configured to be movable into fluid configuration such that the reagents in the assay unit are brought into contact with the reagents. Further a system for automated detection of an analyte in a body fluid sample is decribed, said system comprising a cartridge and a detection assembly, said system further comprising an automated fluid transfer device in the form of a pipette. The cartridge holds all reagents and liquids required by the assay. The system carries out all necessary steps automatically, said steps being hardwired into the instrument, chosen according to user input, according to a remote user or system or according to an identifier, such as a bar code or RFID on the cartridge.

WO 2009/126303 discloses an apparatus for conducting luminescence assays in multi-well plates, the apparatus comprising a light detection subsystem, a liquid handling subsystem and a plate handling subsystem, said apparatus processing samples by a continuous interleaved process. A reagent cartridge may be provided which may be used to deliver reagent used by and waste generated by a multi-well plate analysis. The reagent and waste compartments may be provided by collapsible bags located in the cartridge body.

EP 1 650 570 (Mitsubishi Kagaku latron) discloses a cartridge for automatic measurement devices for determining a component in a sample. The detection of the component may be performed by an immunological reaction. All of the reagents necessary for the measurement of the component may be filled in the cartridge. The cartridge may carry information relating to reagent management information and information relating to a calibration curve, said information being printed on the cartridge in the form of a barcode.

WO 2013/068760 (Axis Shield ASA) describes assay cartridges which may be loaded into an analyser device to perform a diagnostic assay on a sample, wherein the cartridge may be supplied to a customer pre-filled with the reagents required for a particular assay. The cartridge comprises a base member defining wells, which may be filled with reagents and which are initially sealed by a foil lid. The cartridge further includes a cap member with a pipette, said cap being releasably coupled to the base member. An extension member defining at least one well may be fastened to the base member, such that the pipette is positionable in said at least one well of the extension member. The extension member may be made of a different material than the base member. Further, reagents kept in the extension member may be stored under different conditions than reagents kept in the base member. In a preferred embodiment, the extension member is fastened to the base member by means of a channel and a mating projection. Further, the fastening may comprise latching means to fasten the extension member resiliently with the base member.

US 2009/088336 A1 discloses a cartridge for automated detection of an analyte in a bodily fluid sample, said cartridge comprising an array of addressable assay units configured to run a chemical reaction that yields a detectable signal indicative of the presence or absence of the analyte as well as an array of addressable reagent units, wherein each regent unit is addressed to correspond to an assay unit and are calibrated for that specific assay unit. The assay unit may be configured to run an immunoassay from a blood sample. The cartridge may comprise all reagents required to perform a plurality of assays in parallel. The housing of the cartridge may be configured to collect waste liquids which are transferred back through a hole in the housing.

US 4,704,255 describes an assay cartridge having a plurality of aligned adjacent wells which may be used for immunochemical assays. The assay cartridge comprises a filter membrane located between the wells and a waste reservoir. By applying a reduced pressure to the waste reservoir, a liquid phase may be drawn through the filter and into the waste reservoir.

US 4,090,850 discloses an apparatus for use in radio immunoassays. The apparatus comprises a receptacle tray with multiple wells, each of said wells having at its bottom an orifice of such size and shape as to retain liquid under given pressure conditions and permit the evacuation of said liquid under reduced pressure. The wells include an orifice at the bottom and each orifice has means to allow for the drawing of a vacuum and for the removal of the liquid from the wells.

US 4,902,481 relates to a laboratory apparatus for biological and chemical assays, particularly with multi-well filtration device capable of retaining liquids for substantial periods of time prior to filtration. The filtration device comprises a plate having a plurality of wells, open at one end and having a filtration membrane positioned across an opposing end. A second plate is provided having a second set of wells which register with the wells of the first plate. The second wells include a small opening having a spout which is adapted to receive liquid passing through the filtration membrane. The size of the opening and sprout are controlled so that liquid is retained in the first wells under normal atmospheric conditions due to the surface tension forces but passes therethrough when a differential pressure is applied.

The cartridges known in the prior art have the disadvantage that removal of solutions and their transfer to a waste flask or compartment requires the use of a liquid transfer system, which carries the risk of cross-contamination.

### Summary of the invention

It is the object of the invention to create a cartridge for a chemical or biological assay which has an increased efficiency of use, a reduced risk of error and which facilitates the operation of an automated diagnostic system.

The solution of the invention is specified by the features of claim 1. According to the invention the cartridge comprises a housing and at least one reaction well for a chemical or a biological assay arranged in an outside surface of said housing. Said at least one reaction well has a bottom surface, which is preferably coated with at least one chemical or biological binding agent suitable to bind to a component to assay the presence of said component in a probe. The cartridge further comprises at least one storage vessel arranged in said housing, said at least one storage vessel comprising a reagent solution, wash solution and/or dilution solution in a quantity which is sufficient to carry out the assay said at least one reaction well. The cartridge has a number of storage vessels which is chosen such that all reagent solutions, wash solutions and/or dilution solutions needed to carry out the assay in said at least one reaction well are present in said cartridge. The cartridge further comprises a waste tank arranged beneath said at least one reaction well, wherein said at least one reaction well comprises at least one opening on the bottom surface with which the reaction well may be selectively brought into fluid communication with said waste tank, preferably through actuation means.

Use of the cartridge according to the present invention facilitates the lot management, as all solutions used for the assay carried out in the at least one reaction well belong each to a specific lot, which has passed all necessary quality controls and for which calibration data is available. Hence, no mixing of solutions of different lots is possible and it is not necessary for the manufacturer to keep solutions of the same lot in reserve in order to top up solutions of customers.

By providing a waste tank beneath the at least one reaction well, it is possible to flush a solution present in the at least one reaction well into the waste tank without the need to use any fluid transfer means, like e.g. a pipette or the like. This facilitates the use of the cartridge and reduces the risk of cross contamination which is present when using a fluid transfer means. Further, a device for automatically carrying out chemical or biological assays which uses said cartridge does not need any waste container, but rather the waste is removed and disposed together with the cartridge.

The housing of the cartridge is preferably made of a rigid material, preferably of a polymer material. The housing may have any suitable form, however, preferably, the housing is in the general form of a rectangular cuboid, i.e. of a three-dimensional body having six rectangular surfaces. The housing preferably has a length which is greater than a width. Hence, the housing has a longitudinal shape as seen from above. Preferably, a height of the housing is greater than the width.

In the present application, a "reaction well" is understood as a well, i.e. an enclosed space having a surrounding wall and a top and bottom surface, of which at least the top surface is open or comprises means to insert a fluid or solid into the reaction well, within which at least a detection reaction is carried out in order to detect the presence or absence of an analyte, protein, nucleic acid, infectious agent, etc. in a probe.

The at least one reaction well is arranged in an outside of said housing, i.e. the reaction well forms a protrusion within a surface of said housing which is arranged on top when the cartridge is in proper use. Preferably, said at least one reaction well has a round or rectangular cross section. Alternatively, said reaction well may have a cross section in any useful form, such as e.g. oval or polygonal.

The cartridge preferably comprises more than one reaction wells, preferably at least two reaction wells. More preferably, the cartridge comprises from 2 to 10 reaction wells, even more preferably from 4 to 8 reaction wells. However, most preferably, the cartridge comprises 8 reaction wells. With a cartridge having several reaction wells it is thus possible to carry out a series of chemical or biological assays with one cartridge. For example, a blood sample of a patient may be analysed for the presence of a multitude of analytes, proteins, nucleic acids and/or infectious agents by means of more than one assay by using a single cartridge. Alternatively, samples of more than one patient may be analysed together using only one cartridge, as each sample may be put into its own reaction well.

The bottom surface of the at least one reaction well is preferably coated with at least one chemical or biological binding agent suitable to bind to a component to assay the presence of said component in a probe. Said component preferably is an analyte, protein, nucleic acid and/or infectious agent.

In the present application, the term "analyte" is understood to include any chemical compound, such as for example a carbohydrate chain, a mono- or polysaccharide, a carboxylic acid, etc. For example, such a compound may be a hormone, a hormone like substance, cholesterol or any other chemical compound found in blood.

The probe is preferably a liquid probe. Preferably, the probe is blood, urine or another bodily fluid from a human or animal. The probe preferably is whole blood. Alternatively, the probe is blood serum. In a further alternative, the probe may comprise blood cells which have been separated from the blood serum, e.g. by means of centrifugation.

The biological binding agent preferably is an enzyme, protein or antibody. Preferably, the bottom surface is coated with an array of different biological binding agents, such as to allow the use of each reaction well for an assay of the multiplex type. For example, the at least one reaction well may be coated with an array of antibodies specific for different antigens. In the case that the cartridge comprises more than one reaction wells, each reaction well may be coated with the same biological binding agent(s) or the same array of biological binding agents. Alternatively, each reaction well of the cartridge has a bottom surface coated with different biological binding agents or a different array of biological binding agents.

The at least one reaction well preferably has an open top surface when in use. In order to avoid contamination of the reaction well, the cartridge preferably comprises a seal or lid closing of the at least one reaction well, which may be removed prior to the use of the cartridge. For example, the cartridge may comprise a removable plastic or aluminium seal which covers all reaction wells present on the cartridge. Alternatively, each reaction well may be provided with its own removable seal. In a further alternative, the cartridge may include a piercable seal covering the at least one reaction well.

In the present application, the term "storage vessel" means an enclosed space having a surrounding wall and a top and bottom surface, of which at least the top surface is open or comprises means to access a fluid or solid present in the storage vessel. The at least one storage vessel comprises a reagent solution, wash solution and/or dilution solution in a quantity which is sufficient to carry out the assay in each one of said at least two reaction wells. Hence, the volume of the solution contained in said at least one storage vessel is selected such as to allow carrying out an assay in the at least one reaction well or in the case that the cartridge comprises more than one reaction well, in each of said reaction wells. Further, the number of storage vessels is selected such that all solutions needed to carry out the assay(s) in all the reaction wells of the cartridge are present in the storage vessels of the cartridge. In the event that the reaction wells allow carrying out different assays with the cartridge, the number of storage vessels and the volumes of solutions carried therein are selected such that a sufficient amount of the solutions needed for each specific assay is present.

The at least one storage vessel preferably has an open top surface when in use. In order to avoid contamination of the at least one storage vessel, the cartridge preferably comprises a seal or lid closing the at least one storage vessel, which may be removed prior to the use of the cartridge. For example, the cartridge may comprise a removable plastic or aluminium seal which covers the at least one storage vessel. Alternatively, the cartridge may include a piercable seal covering said at least one storage vessel.

Preferably, the cartridge comprises one seal or lid covering both said at least one reaction well and said at least one storage vessel.

Said cartridge preferably comprises means to releasably couple two or more cartridges together. Such means may comprise form fit connections, such as a pinion which may be engaged in a slot.

Further, the cartridge preferably comprises a machine readable identification means, such as a barcode, 2D-barcode or RFID chip. With such an identification means, an automated diagnostic device may identify the cartridge, specifically in relation to the type(s) of assay(s) which may be carried out with the cartridge. Further information may be derived from the machine readable identification means, such as for example a lot number, expiration date or calibration data. The information may be encoded in the machine readable identification means. Alternatively, the machine readable identification means comprises an identification number of the cartridge, which allows the automated diagnostic device to fetch further information from a database either residing in a memory of said diagnostic device or in a remote datacentre, e.g. by means of a data network.

The cartridge comprises one waste tank with which the at least one reaction well may selectively be brought into fluid communication. In the case that more than one reaction well is present on the cartridge, the cartridge may comprise a separate waste tank for each of the at least two reaction wells. Alternatively, only one waste tank may be present with which all the reaction wells present on the cartridge may selectively be brought into fluid communication.

The at least one opening is preferably arranged in a peripheral region of the reaction well on said bottom surface, preferably in the vicinity of an edge of said bottom surface or on an edge to a coated area onto which the at least one chemical or biological binding agent is coated. Preferably, each reaction well comprises 2 or 4 openings.

The at least one opening preferably has a length which is sufficient such as to avoid a liquid present in the waste tank to be pushed into the respective reaction well, e.g. when the cartridge is subjected to shaking during an assay.

In the context of the claimed invention, said at least one opening is connected to a duct leading towards or protruding into said at least one waste tank and an outflow of said duct allowing the discharge of a liquid into said at least one waste tank. Provision of a duct efficiently prevents the backflow of a liquid present in said at least one waste tank back into the reaction well through said opening.

At least the bottom surface of said at least one reaction well is made of or coated with a hydrophobic material, such as to ensure a good drainage of a liquid present in the reaction well.

Preferably, said at least one opening is at least partially made of or coated with a hydrophilic material, such as to enhance the drainage of a liquid present in a reaction well, especially in combination with a hydrophobic material or coating of the bottom surface of the reaction well.

The at least one opening preferably has a maximal diameter which is selected such that a flow of a liquid through said opening from the respective reaction well to said waste tank is prevented by a surface tension of said liquid and a flow of the liquid may be enabled by application of an overpressure in said reaction well and/or an under-pressure in said waste tank such as to press and/or suck said liquid from said reaction well into said waste tank. Preferably, said at least one reaction well comprises a sealing element on a top edge thereof, which allows the application of overpressure e.g. by means of a fluid delivery tool as described below. Said sealing element may be in the form of a sealing ring, sealing lip or of a circumferential slot into which a sealing ring of a fluid delivery tool may be positioned. Preferably, said at least one opening comprises a closing element which may be moved from a closed position, where a flow of a liquid from the respective reaction well to said waste tank is prevented, to an open position allowing the flow of liquid from the respective reaction well to said waste tank by said actuation means.

Said closing element may be in the form of a valve which may be selectively opened and closed. Preferably, the valve is hold in the closed position by an elastic force, e.g. provided by a spring element. The actuation means preferably are in the form of a mechanical actuator. Alternatively, use of a magnet or electric coil as actuation means may be envisaged.

Alternatively, said closing element may be a piercable seal or a rubber septum. In this case, the actuation means are in the form of a needle or cannula which pierces the seal or rubber septum.

Preferably, said actuation means is an actuation peg coupled to said closing element and protruding from the housing of said cartridge, said actuation peg being movable such as to move said closing element from said closed position into said open position and vice verca.

Each reaction well preferably has its own actuation peg such as to allow an opening of the at least one opening of a specific reaction well. Alternatively, the cartridge comprises one actuation peg which allow to open the at least one opening in all reaction wells present on the cartridge simultaneously.

Preferably, said actuation peg(s) is (are) pushed in a linear downward motion such as move said closing element into the open position. Alternatively, said actuation peg(s) may be pulled upwards in a linear motion or turned in a specific direction around their length axis in order to move the closing element(s) of a respective reaction well into the open position. The actuation peg(s) preferably protrude from the cartridge from the top surface. This allows a pipetting or wash unit of an automated diagnostic device to mechanically push, pull on or turn said peg(s) such as to move the closing element(s) of a respective reaction well or of all reaction wells into the open position.

In the context of the claimed invention, said at least one opening is connected to a duct leading towards or protruding into said at least one waste tank and an outflow allowing the discharge of a liquid into said at least one waste tank, wherein a diameter of said duct increases from the opening towards said outflow.

Provision of such a duct prevents the backflow of liquid present in the at least one waste tank. Further, the increasing diameter prevents the clogging of the duct, especially clogging due to cluster formation of red blood cells which may form when red blood cells are in contact with air.

A further aspect of the present application, not forming part of the claimed invention, concerns a device for automatically carrying out chemical or biological assays. Said device has at least one area onto which a cartridge as disclosed above is removably arranged in a defined position and orientation. The device further comprises at least one actuator to which a fluid delivery tool is mounted; the actuator moving said at least one fluid delivery tool in at least one spatial direction. The fluid delivery tool has at least one aperture which may be positioned above the at least one reaction well of the assay cartridge by said actuator. The aperture allows the delivery of a fluid to said at least one reaction well of said cartridge. The aperture is dimensioned such as not to protrude into said reaction well.

By the use of such a device fluid delivery to the at least one reaction well of the cartridge may be performed without that any part of the fluid delivery tool comes into contact with any liquid already present in said at least one reaction well. Hence, the risk of cross-contamination is eliminated. Further, as no pipette tips or cannulas must be washed or ejected and affixed to the fluid delivery tool, the processing time is greatly enhanced.

By arranging the cartridge in a defined positon and orientation onto said at least one area allows the actuator to precisely position the at least one aperture of the at least one fluid delivery tool above the at least one reaction well or above a specific reaction well in the case that the cartridge comprises more than one reaction well. Alternatively, the device may comprise a sensor, such as a camera, to determine the position and/or orientation of the at least one cartridge in the at least one area.

The term "removably arranged" is understood herein as a transient arrangement of a cartridge on said at least one area. The underlying idea is that a cartridge may be arranged on said at least one area, at least one assay carried out in the at least one reaction well of said cartridge and the cartridge then removed, e.g. for disposal or storage.

Such as to allow the arrangement of the cartridge in the defined position and orientation, the at least one area may comprise guide means which are configured such that the cartridge may only be inserted in one orientation and locked into the defined position by a user. Alternatively, the device may comprise a handling system which picks us a cartridge and automatically places the cartridge on the at least one area in the defined position and orientation. Such a handling system may be in the form of a gantry robot having means to pick up or couple to a cartridge.

The at least one area preferably comprises means to lock the cartridge in the defined position and orientation, e.g. means of the form-fit or interference-fit type. For example, the cartridge may be locked on said area by means of a snap fit connection or the like.

The at least one area preferably comprises means to impart a shaking motion to the cartridge placed thereon, e.g. to improve a binding reaction of an assay by agitating the probe and any reaction solution present in the at least one reaction well. These means may be realized in the form of a platform shaker or orbital shaker which imparts a shaking motion to the at least one area and hence to a cartridge placed thereon.

Further, the device may comprise at least one heating and/or cooling unit arranged in such a way as to be able to heat and/or cool a cartridge placed onto said at least one area. This allows performing assays under various or constant temperatures, for example 37°C. Various kinds of heating and/or cooling units are known to a person skilled in the art.

Preferably, the device comprises more than one area, such as to allow a multiplicity of cartridges to be inserted into the device, each in a defined position and orientation. This increases the efficiency of use of the device, as a multitude of assays may be run in parallel on the multiple cartridges present in the device.

Preferably, the at least one spatial direction in which the fluid delivery tool may be moved is the vertical direction, i.e. the direction which lays parallel to the direction of gravity. Hence, the at least one actuator may be moved upwards and downwards such that the at least one fluid delivery tool may be brought into contact with or disengaged from the top surface of the cartridge arranged on the at least one area. Indeed, in order to avoid any cross-contamination, the at least one fluid delivery tool is brought into contact with the cartridge prior to any fluid delivery, whereby the at least one aperture is positioned above the at least one reaction well of the cartridge. Through the contact of the fluid delivery tool with the top surface of the cartridge, the risk of contamination of a neighbouring reaction well (if the cartridge comprises more than one reaction well) or of a storage vessel by the fluid delivered to the at least one reaction well is in essence eliminated.

The at least one actuator preferably is a gantry robot which may move the fluid delivery tool in at least two, preferably in at least three spatial directions. This allows to move the at least one fluid delivery tool from a position above a cartridge to a position which is not above said cartridge. Preferably, the at least one actuator may thereby move the at least one fluid delivery tool from a position above one cartridge to a position above another cartridge, in the case that the device comprises more than one area onto which a cartridge is removably arranged.

Preferably, the device comprises more than one actuator, more preferably two actuators, to which at least one fluid delivery tool each is mounted. The actuator(s) may comprise further tools, such as a liquid detection unit, a pipette, a camera, etc. Most preferably, the actuator(s) includes at least one pipette element to which pipette tips may be removably attached, such that a probe may be automatically transferred from a probe vial into at least one reaction vessel of a cartridge removably arranged on the at least one area. By means of the at least one pipette, solutions may alternatively be transferred from a storage vessel of the cartridge into the at least one reaction vessel.

Preferably, the cartridge is a cartridge as disclosed above, i.e. a cartridge with a housing with the at least one reaction well arranged on an outside surface of said housing. Preferably the bottom surface of said at least one reaction well is coated with at least one biological binding agent suitable to bind to a component to assay the presence of said component in a probe. Preferably said cartridge further comprises at least one storage vessel arranged in said housing, said at least one storage vessel comprising a reagent solution, wash solution and/or dilution solution in a quantity which is sufficient to carry out the assay in said at least one reaction well, the number of storage vessels of said cartridge being chosen such that all reagent solutions, wash solutions and/or dilution solutions needed to carry out the assay in each of said reaction wells are present in said cartridge. The cartridge further comprises a waste tank arranged beneath said at least one reaction well, wherein said at least one reaction well comprises at least one opening on the bottom surface with which the respective reaction well may be selectively brought into fluid communication with said waste tank, preferably through actuation means.

The at least one aperture of the at least one fluid delivery tool preferably has a round shape. In certain embodiments, the at least one aperture may comprise a fluid nozzle, e.g. such as to create a jet of fluid with a defined shape and diameter. Preferably, the at least one aperture is an orifice formed in a bottom surface of a casing of said fluid delivery tool.

Said at least one fluid delivery tool preferably comprises more than one aperture, such as from 2 to 10 apertures, more preferably 8 apertures. Most preferably, the number of apertures of said at least one fluid delivery tool is equal to the number of reaction wells of said cartridge. In this way, a fluid may be delivered to each of said reaction wells of said cartridge at the same time by said at least one fluid delivery tool. In this case, the fluid delivery tool preferably comprises valves with which delivery of a fluid may be performed selectively through at least one of the more than one aperture. This allows delivery of the fluid to only one or to a selected number of the reaction wells. Alternatively, the fluid may be delivered through all apertures simultaneously.

Preferably, said at least one fluid delivery tool comprises at least one inlet for the fluid. Said inlet may be connected to a tube leading to a reservoir of the fluid. The fluid delivery device preferably comprises a fluid pump which allows the conveyance of a fluid through said at least one aperture. Preferably, said fluid pump is a peristaltic pump.

With this fluid pump, a fluid may be aspirated through the at least one inlet or through the at least one needle and delivered to the at least one reaction well through said at least one aperture.

The device preferably further includes a sensor to detect a colorimetric reaction of a chemical or biological assay carried out in the at least one reaction well. The sensor preferably is a camera, e.g. a CCD-camera which is preferably connected to the at least one actuator. Hence, the cartridge does not need to be moved to a detection location but the result of the colorimetric reaction may rather be measured by moving the sensor by means of the at least one actuator to the cartridge to capture an image of the respective reaction well.

Further, the device preferably comprises a drawer onto which vials with probes may be arranged by an operator, said drawer preferably including a rack into which said vials may be placed. Further, the device preferably comprises a control element with at least one microprocessor, which operates the various elements of the device, specifically the movement of the at least one actuator. The control element preferably comprises a memory and input means, such that the correct sequence of manipulations, like at least the delivery of a fluid to the at least one reaction well is performed by the at least one fluid delivery tool. The memory may comprise various sequences of manipulations corresponding to a multitude of assays. Preferably, the input means comprise a keyboard, buttons and/or a touch-screen which allows an operator to select at least one assay to be performed in the at least one reaction well of the cartridge.

Further, the device more preferably comprises a reader to read a machine readable identification means arranged on said cartridge, e.g. a barcode reader or RFID reader. By accessing information encoded on said machine readable identification means, the device may automatically determine which kind of assay(s) may be carried out in the at least one reaction well. Further information may also be derived from the machine readable identification means, such as for example a lot number, expiration date or calibration data of the cartridge. The information may be encoded in the machine readable identification means. Alternatively, the machine readable identification means may comprise an identification number of the cartridge, which allows the device to fetch further information from a database either residing in the memory of the device or in a remote datacentre, which is accessible through a communication network.

Preferably, said at least one fluid delivery tool comprises means to selectively deliver a flow of gas or a liquid to said at least one reaction well through said ate least one aperture such as to blow a liquid or gas present in said at least one reaction well through said at least one opening into said waste tank or such as to fill a liquid into said at least one reaction well, respectively.

By delivering the flow of gas it is possible to empty the at least one reaction well from any liquid or gas present therein, wherein said liquid or gas is blown into said at least one waste tank trough said at least one opening on the bottom surface of said at least one reaction well, without the need to insert any kind of cannula or pipette tip into said at least one reaction well.

The means for the selective delivery are preferably in the form of at least one valve, e.g. of a solenoid valve.

Preferably, said fluid delivery tool comprises at least one needle which protrudes from said fluid delivery tool and which may be inserted into a storage vessel of said cartridge.

In this way, the fluid delivery tool may deliver a solution present in said storage vessel of the cartridge to the at least one reaction well of said cartridge. The needle is preferably inserted into said storage vessel with the same movement with which the fluid delivery tool is moved into contact with said cartridge. In a further embodiment, the fluid delivery tool may comprise a number of needles which corresponds to a number of storage vessels of the cartridge, so that all solutions contained in the storage vessels of the cartridge may be delivered to the at least one reaction well of the cartridge by means of the at least one fluid delivery tool. In this case, each needle includes a valve such as to allow delivery of a selected solution arranged in one of said storage vessels to the at least one reaction well.

Said needle is preferably made of steel, in particular stainless steel. Alternatively, said needle may be made of a polymeric material. Further preferably, said needle is connected to the fluid delivery tool in a removable manner, e.g. by means of a clamp or of a screw connection. This allows to quickly exchange the needle or to remove the needle for cleaning purposes.

The at least one needle protrudes from said fluid delivery tool, i.e. the at least one needle extends beyond said fluid delivery tool in at least one spatial direction. The length of said at least one needle is preferably chosen such that it may reach the bottom of the at least one storage vessel of the cartridge.

Preferably, the at least one needle is connected to the fluid delivery tool by means of an actuation element, said actuation element moving said at least one needle in at least one spatial direction relative to a housing of the fluid delivery tool.

By means of the actuation element, the at least one needle may be moved to a specific storage vessel of the cartridge without the need to move the entire fluid delivery tool. Hence, this greatly extends the versatility of the fluid delivery tool.

Preferably, the actuation element is configured such that the at least one needle is moved linearly in said at least one spatial direction. Further, said at least one actuation element preferably comprises a drive for moving said at least one needle in the at least one spatial direction.

Preferably, said actuation element allows movement of the at least one needle in one or two spatial direction(s), which is (are) oriented parallel to the surface of the housing of the cartridge which is arranged on top when the cartridge is arranged in the device. With this configuration it is possible to at least move the at least one needle away of the housing of the fluid delivery tool.

Preferably, the actuation element comprises at least one drive which enables the movement of said at least one needle in the at least one spatial direction relative to the housing of the fluid delivery tool. The at least one drive preferably is an electromechanical drive which comprises an electric motor, e.g. a servo-motor or a stepper motor, as well as at least one mechanical element, such as for example a gear. For example, the at least one drive may comprise an electric motor and a spindle which is driven in rotation by said motor in order to move said at least one needle in the at least one spatial direction.

Preferably, the actuation element comprises at least one guideway, such as e.g. a guide rod or a sliding bar which limits the movement of the at least one needle to one or two spatial directions. Preferably, the actuation element may further comprise means to allow a rotation of the at least one needle around at least one axis.

In a preferred embodiment, the actuation element comprises an arm with at least one hinge. Preferably, said arm is rotationally connected with a first end to the fluid delivery tool while said at least one needle is connected to a second end to said arm. The at least one hinge is located between said first and second end. Said at least one hinge is preferably located such that the arm is subdivided into two or more sections of equal lengths. Such a configuration allows for a simple and cost effective provision of the actuation element.

Preferably, the arm is pre-stressed to a closed position by an elastic force. The term "closed position" is understood in the present application as being the position of the at least one needle which is closest to the housing of the fluid delivery tool. In this position, the arm is in a closed configuration. In this embodiment, the actuation element does not comprise a drive. Instead, the at least one needle is first partially introduced into a storage vessel by moving the fluid delivery tool to an appropriate position by means of the actuator. Then, the fluid delivery tool is moved into a position where the at least one aperture of the fluid delivery tool is positioned above the at least one reaction well of the cartridge. As the needle is partially introduced into the storage vessel, the needle is mechanically hindered to follow the movement of the fluid delivery tool by a wall of the storage vessel. Hence, the arm will unfold into an open position. As the arm is pre-stressed into the closed position, an upwards movement of the fluid delivery tool by means of the actuator will lead to a disengagement of the at least one needle from the storage vessel. However, in this case, the at least one needle is no longer mechanically hindered by the wall of the storage vessel and will be moved to the closed position by the elastic force. Preferably, said elastic force is caused by at least one elastic element, such as e.g. a spring, which is arranged between the first and second end of the arm.

The present application further concerns a method for emptying a liquid from at least one reaction well of a cartridge, preferably of a cartridge as disclosed above. Said at least one reaction well has at least one opening arranged on a bottom surface with which the reaction well may be selectively brought into fluid communication with a waste tank of said cartridge. In a first step of the method, the cartridge is arranged on an area of a device for automatically carrying out chemical or biological assays in a defined position and orientation. In a second step of the method, a fluid delivery tool having at least one aperture is moved by means of an actuator of said device above said cartridge, such that said at least one aperture is above said at least one reaction well. In a third step, a flow of gas is delivered through said aperture into said reaction well such as to blow out said liquid through said at least one opening to said waste tank. The device is preferably a device as described above. Preferably, the gas is air which is aspirated through an inlet of the fluid delivery tool.

The invention is defined by the appended claims.

### Brief description of the drawings

The drawings used to explain the embodiments show:
- Fig. 1: a three-dimensional view of a cartridge according to the present invention;
- Fig. 2: a top view of the cartridge according to Fig. 1;
- Fig. 3: a cross-section of the cartridge according to Fig. 1;
- Fig. 4: an exploded view of the cartridge according to Fig. 1;
- Fig. 5: an enlarged detailed view of a reaction well;
- Fig. 6: a device according to the present invention;
- Fig. 7: a schematic cross-sectional view of a further embodiment of a fluid delivery tool;
- Fig. 8: a top view of the fluid delivery tool according to Fig. 7;
- Fig. 9: a schematic cross-sectional view of the fluid delivery tool of Fig. 7 with the needle in a position closer to the fluid delivery tool housing;
- Fig. 10: a top view of the fluid delivery tool of Fig. 9.

In the figures, the same components are given the same reference symbols.

### Preferred embodiments

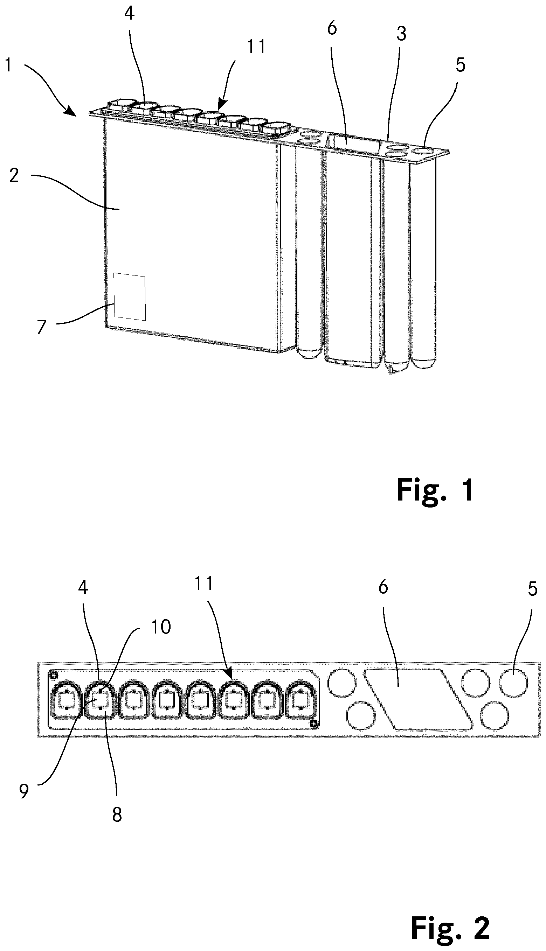

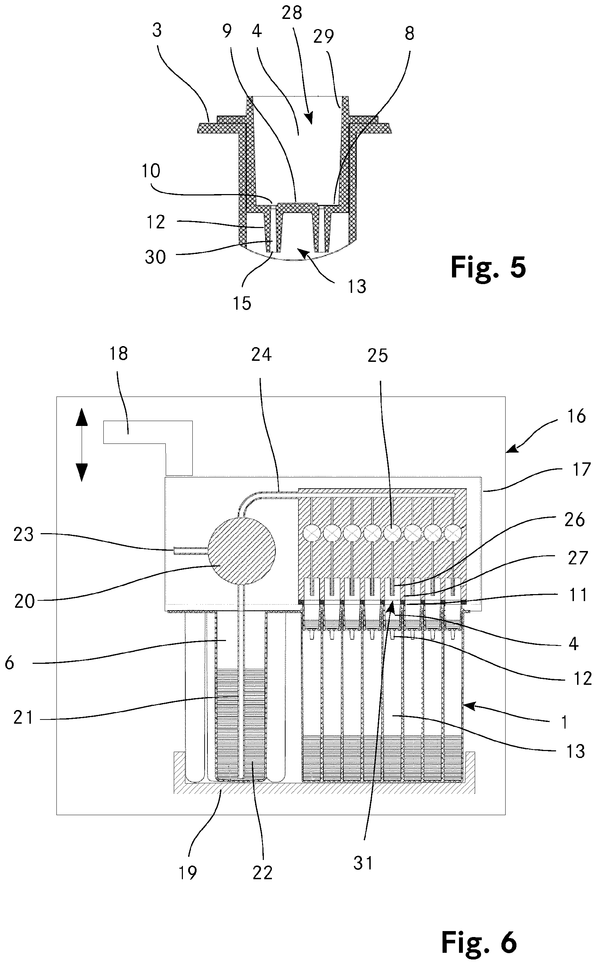

**Fig. 1** shows a three-dimensional view of a cartridge 1 according to the present invention. The cartridge 1 comprises a housing 2 with an outside surface 3. Further, the cartridge comprises eight reaction wells 4 (of which only one is marked with reference numerals) which are arranged on the outside surface 3 of the housing 2. Each reaction well 4 may be used to carry out a chemical or biological assay. While the embodiment of the cartridge 1 shown has eight reaction wells 4, any number of reaction wells 4 may be present depending on the intended use of the cartridge 1. Each reaction well 4 is open towards the outside surface 3, specifically towards the top surface, of the housing 2, such that the reaction wells 4 may be accessed, e.g. to fill a liquid into said reaction wells 4. Further, the reaction wells 4 include a sealing lip 11 which protrudes from said outside surface 3. The function of said sealing lip 11 is explained in connection with **Fig. 6****.** Each reaction well may comprise a coating with at least one chemical or biological agent suitable to bind to a component to assay the presence of said component in a probe. Said component preferably is an analyte, protein, nucleic acid and/or infectious agent. Hence, each reaction well 4 is suitable to carry out a specific chemical or biological assay. All reaction wells 4 of the cartridge may comprise a coating with the same at least one chemical or biological agent. Alternatively, the reaction wells 4 may comprise coatings with at least one different chemical or biological agent, such that two or more different types of assays may be carried out with one cartridge 1. In a further alternative, the reaction wells 4 may not contain any coating, but are rather configured to act as receptacle for a probe and at least one reagent solution.

The cartridge 1 in the embodiment as shown further includes five solution storage vessels 5 as well as a wash solution storage vessel 6. The solution storage vessels 5 are provided in a cylindrical shape while the wash solution storage vessel 6 is larger than said solution storage vessels 5 and has a cross-section in the form of a rhomboid. Hence, the wash solution storage vessel 6 has a larger volume than said solution storage vessels 5. The solution storage vessels 5 are filed with different reaction solutions and dilution solutions while the wash solution storage vessel 6 is filled with a wash solution or wash buffer. The reaction solutions, dilution solutions and the wash solution are used for carrying out assays in the reaction wells 4. The number of the solution storage vessels 5 may be varied according to the number of solutions needed for the assays. Further, a cartridge 1 may also comprise more than one wash solution storage vessel 6, for example if different assays needing different wash solutions may be carried out in the reaction wells 4.

Such as to be identifiable in a device for automatically carrying out chemical or biological assays, the cartridge further comprises a barcode 7 which may be read by an appropriate sensor or reader of sais device. The barcode 7 may be of the one or of the two dimensional type. Alternatively, barcode 7 may be replaced by an RFID tag or the like.

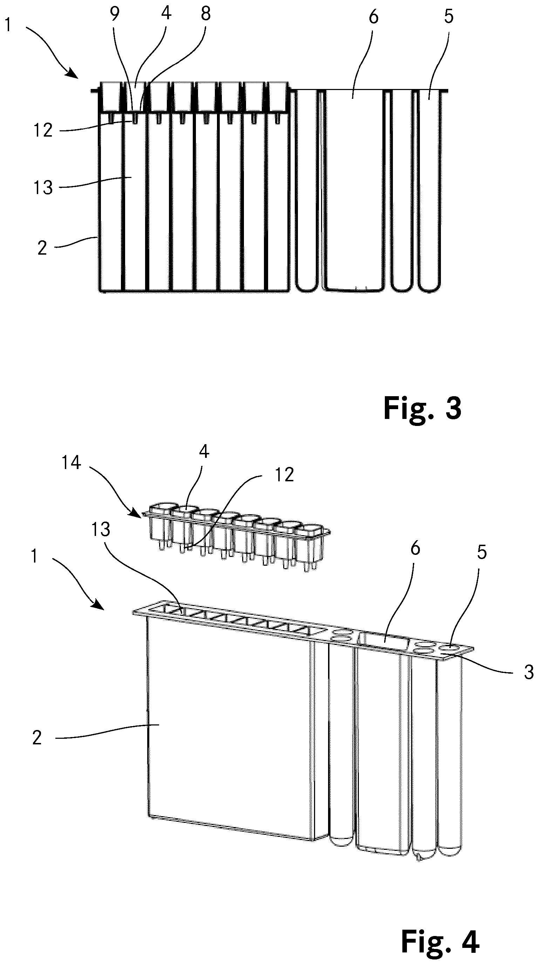

**Fig. 2** shows the cartridge 1 of **Fig. 1** from above. As may be seen in this figure, the reaction wells 4 have a flat bottom surface 8 onto which a coated area 9 comprising a coating of at least one chemical or biological agent is arranged. The coating area 9 is offset from said bottom surface 8 in a vertical direction. Along the coating area 9, each reaction well 4 comprises two openings 10 which allow to selectively bring each reaction well 4 into fluid communication with a waste tank located beneath said reaction wells 4, as shown in **Fig. 3****.** In the embodiment shown, the openings 10 are dimensioned such that entry of a liquid into said openings 10 is prevented by action of the surface tension of the liquid. From this figure, the cross-section of the reaction wells 4 of the embodiment shown may be seen. In this embodiment, the reaction wells 4 have an essentially rectangular cross-section, wherein one side of the rectangle is configured as arc.

**Fig. 3** shows a cross section of the cartridge 1 of **Fig. 1****.** As may be seen in this drawing a waste tank 13 is arranged beneath each reaction well 4. The waste tanks 13 are arranged within the housing 2 of the cartridge 1. A duct 12 is present below each opening 10, said ducts 12 protruding into the respective waste tank 13 lying beneath the reaction well 4. The ducts 12 prevent any backflow of a liquid present in a waste tank 13 into a reaction well 4. Further, as may be discerned, the coated areas 9 are slightly offset from the bottom surfaces 8 of the reaction wells 4. This facilitates the drainage of liquid out of said coated area 9 and into the openings 10. Through the action of a pressure applied on a liquid present in any of the reaction wells 4, the liquid is pushed through the respective openings 10 and via the ducts 12 into the waste tank. Hence, through an overpressure in a reaction well 4, said reaction well 4 may be emptied from any liquid present therein.

**Fig. 4** shows an exploded view of the cartridge according to **Fig. 1****.** In order to facilitate the production of the cartridge 1, the reaction wells 4 are produced as a separate insert 14 which may be permanently attached to the housing 2 of the cartridge 1, e.g. by means of an irreversible snap-fit connection, welding, gluing or the like. Therefore, the housing 2 with the waste tanks 13, the solution storage vessels 5 and the wash solution storage vessel 6 as well as the insert 14 may be produced as separate parts, e.g. by means of injection moulding and later assembled. The coating may be applied to the coated areas 9 of the reaction wells 4 either prior or after assembly of the insert 14 to the housing 2.

**Fig. 5** shows an enlarged detailed view of a reaction well 4. The reaction well 4 comprises a circumferential wall 29 and a bottom surface 8 which define a reaction well volume 29. Within the reaction well volume 29, a liquid probe as well as other solutions, such as reaction solutions, wash solutions and/or dilution solutions may be filled. On the bottom surface 8 the reaction well 4 includes a slightly raised coated area 9 onto which at least one chemical or biological binding agent is bound thus forming a coating on said coated area 9. Further, the reaction well 4 comprises two openings 10 on said bottom surface 8. The openings 10 are arranged directly adjacent to the coated area 9 in the embodiment shown. The openings 10 are dimensioned such that entry of a liquid is prevented by the surface tension of said liquid. Only upon application of a pressure onto a liquid present in said reaction well volume 29 said liquid is pushed through said openings 10. A duct 12 is arranged directly beneath each of said openings 10. Said duct protrudes into the waste tank 13 (only shown in part) located beneath the reaction well 4. At its end located in said waste tank 13, the duct 12 has an outflow 15. Within said duct 12 is a channel 30 which connects the opening 10 with the outflow 15 such that a fluid may flow from said opening 10 to said outflow 15 through said channel 30. The diameter of the channel 30 increases from said opening 10 towards said outflow 15. This prevents clogging of the channel 30, especially by clots of red blood cells.

A device 16 according to the present invention is shown in **Fig. 6****.** The device 16 is only exemplarily depicted in this drawing. Generally, the device 16 may comprise a housing as well as a control element with at least one microprocessor, input means, e.g. in the form of buttons, a keyboard and/or a touchscreen display. The device 16 includes an actuator 18 and a fluid delivery tool 17 mounted on said actuator 18. The actuator 18 moves the fluid delivery tool 17 at least in a vertical direction, which is exemplarily shown as double arrow on the drawing. Preferably, however, the actuator 18 moves the fluid delivery tool 17 additionally in further spatial directions. Most preferably, the actuator 18 moves the fluid delivery tool 17 in three spatial directions. The actuator 18 may further comprise additional elements not shown in this drawing, e.g. such as a pipette, a camera, etc. The actuator is preferably realized as gantry robot.

The device further comprises at least one area 19 onto which a cartridge 1 is removably arranged in a defined position and orientation. The area 19 may comprises means (not shown) to lock the cartridge in the defined position and orientation, e.g. means of the form-fit or interference-fit type. For example, the cartridge may be locked on said area 19 by means of a snap fit connection or the like. The device 16 may comprise any suitable number of areas 19. As such, the device 16 may be adapted to different throughput of assays as needed.

The fluid delivery tool 17 comprises apertures 31, each aperture 31 including a dispensing nozzle 26 for delivering a fluid into the at least one reaction well 4 of the cartridge 1. The number of apertures 31 corresponds to the number of reaction wells 4 of the cartridge 1 in the embodiment as shown. Alternatively, the fluid delivery tool 16 may comprise fewer apertures 31 than the number of reaction wells 4. In this case, the fluid delivery tool 16 may be moved by means of the actuator 18 from one reaction well 4 to another reaction well 4. Each aperture 31 comprises a nose 27 which contacts a sealing lip 11 of the respective reaction well 4, such as to form a tight connection, especially an airtight connection. In order to bring the nose 27 into contact with the sealing lip 11, the fluid delivery tool 16 is lowered onto the cartridge 1 by means of the actuator. The apertures 31 are dimensioned such that they do not protrude into the reaction wells 4, i.e. no element of the apertures 31, such as the dispensing nozzles 26 penetrate into the reaction well volume 28.

In order to deliver a fluid to a reaction well 4, the fluid delivery tool 16 comprises a fluid pump in the form of a peristaltic pump 20 which is connected to the dispensing nozzles 27 of the apertures 31 by means of a conduit 24. In order to selectively deliver a fluid only through one of the dispensing nozzles 27 or a specific subgroup of the dispensing nozzles 27, a valve 25 is arranged between the conduit 24 and each dispensing nozzle 27.

In the embodiment shown, the fluid dispensing tool 16 comprises needle 21 with which a wash solution 22 may be aspirated from said wash solution storage vessel 6 by means of said peristaltic pump 20. Further, the fluid dispensing tool 16 comprises an inlet 23 with which air may be aspirated by said peristaltic pump 20. The peristaltic pump 20 includes a switching valve (not shown), with which either a wash solution 22 may be aspirated through the needle 21 or air aspirated through the inlet 23. Alternatively, inlet 23 may be connected to another fluid source, such as a gas bottle or a liquid reservoir, such as a flask or the like.

In order to wash a reaction well 4, wash solution 22 is first aspirated by the peristaltic pump 20 via the needle 21 and conveyed through the conduit 24 to the dispensing nozzle 26 of the aperture 31 corresponding to the reaction well 4 to be washed. Alternatively, by switching the appropriate valves 25 it is possible to convey wash solution 22 to more than one reaction well 4 simultaneously. As soon as a predetermined amount of wash solution 22 has been filed into the reaction well 4, the peristaltic pump 20 is switched off. After a predetermined incubation time, the peristaltic pump conveys air from the inlet 23 through the conduit 24 to the dispensing nozzle 26 of the aperture 31 corresponding to the reaction well 4. As there is an airtight connection between the aperture 31 and the reaction well 4 by interaction of the nose 27 and the sealing lip 11, this creates a slight pressure within the reaction well 4 which exerts a force onto the wash solution present in the reaction well 4. Through this pressure, the wash solution is pushed through the openings 10 of the reaction well 4 into the respective waste tank 13 arranged beneath the reaction well 4. After all the wash solution has been drained through the openings 10 out of the reaction well 4, air may still be conveyed to the reaction well 4 in order to dry the coated area 9.

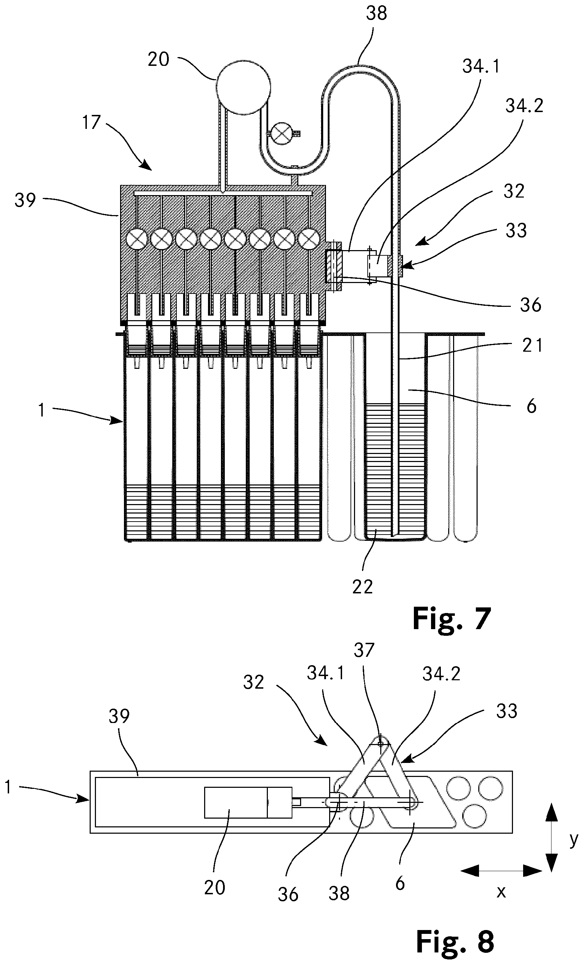

**Fig. 7** shows a schematic cross section of a further embodiment of a fluid delivery tool 17 used in a device or method with a cartridge 1 according to the present invention. The fluid delivery device 17 comprises an actuation element 32 which moves the needle 21 relative to a fluid delivery device housing 39. In the figure, the needle 21 has been moved away of the fluid delivery tool housing 39 such as to be inserted into the wash solution storage vessel 6 of the cartridge 1. The actuation element comprises an arm 33 which is attached to the fluid delivery tool housing 39 and to which the needle 21 is affixed. The arm 33 is attached in a rotatable manner to the fluid delivery tool housing 39 by means of an attachment hinge 36. Further, a drive (not shown) is provided in order to move the needle 21 relative to the fluid delivery tool housing 39. The needle 21 is fluidly connected to the peristaltic pump 20 of the fluid delivery tool 17 by means of a flexible conduit 38.

**Fig. 8** is a top view of the embodiment as shown in **Fig. 7****.** In this figure, the configuration of the arm 33 of the actuation element 32 is recognizable. The arm 33 is divided into two sections 34.1, 34.2 which are rotatably connected together by means of an arm hinge 37. As the arm 33 is further rotatably attached to the fluid delivery tool housing 39 by means of the attachment hinge 36, a linear movement of the needle 21 away of the fluid delivery tool housing 39 is followed by a widening of the angle between a first section 34.1 and a second section 34.2 of the arm 33 as well as of the angle between the first section 34.1 of the arm 33 and the fluid delivery tool housing 39. The rotation axis of the attachment hinge 36 and of the arm hinge 37 are arranged vertical relative to the surface of the housing of the cartridge 1 which is arranged on top, i.e. the axes are oriented in the direction of view in **Fig. 8****.** In this configuration, the arm 33 therefore allows a movement of the needle 21 only in two directions x,y as marked by the double arrows in the figure.

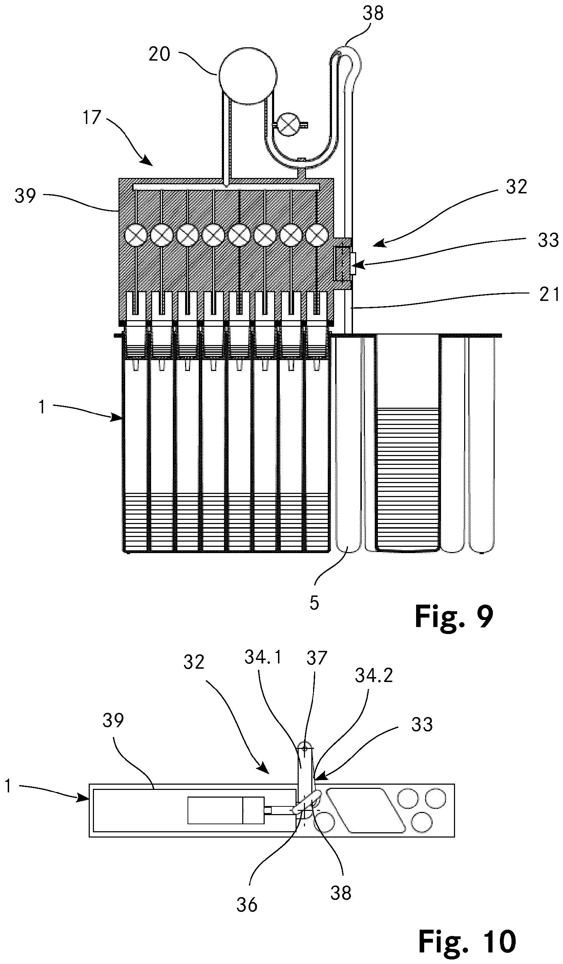

**Figs. 9 and 10** show the embodiment according to **Figs. 7 and 8** where the needle 21 is in a position which is nearer relative to the fluid delivery device housing 39. In this situation, the needle 21 is inserted into a solution storage vessel 5 of the cartridge 1. As may be seen in **Fig. 10****,** both sections 34.1, 34.2 of the arm 33 are close together, whereby the angle between the fluid delivery tool housing 39 and the first section 34.1 as well as the angle between the first section 34.1 and the second section 34.2 of the arm 33 is close to 0°.

## Claims

1. Cartridge (1) with a housing (2) and at least one reaction well (4) for a chemical or a biological assay arranged in an outside surface of said housing (2), said at least one reaction well (4) having a bottom surface (8), preferably coated with at least one chemical or biological binding agent suitable to bind to a component to assay the presence of a component in a probe, said cartridge (1) further comprising at least one storage vessel (5, 6) arranged in said housing (2), wherein said at least one storage vessel (5, 6) comprises a reagent solution, wash solution and/or dilution solution in a quantity which is sufficient to carry out the assay in said at least one reaction well (4), the number of storage vessels (5, 6) of said cartridge (1) being chosen such that all reagent solutions, wash solutions and/or dilution solutions needed to carry out the assay in said at least one reaction well (4) are present in said cartridge (1), wherein said cartridge (1) further comprises a waste tank (13) arranged beneath said at least one reaction well (4), said at least one reaction well (4) comprising at least one opening (10) on the bottom surface (8) with which the reaction well (4) may be selectively brought into fluid communication with said waste tank (13), preferably through actuation means, **characterized in that** said at least one opening (10) is connected to a duct (12) leading towards or protruding into said at least one waste tank (13), said duct (12) having an outflow (15) allowing the discharge of a liquid into said at least one waste tank (13), wherein a diameter of said duct (12) increases from the opening (10) towards said outflow (15).

2. Cartridge (1) according to claim 1, **characterized in that** the at least one opening (10) has a maximal diameter which is selected such that a flow of a liquid through said opening (10) from the respective reaction well (4) to said waste tank (13) is prevented by a surface tension of said liquid and a flow of the liquid may be enabled by application of an overpressure in said reaction well (4) and/or an under-pressure in said waste tank (13) such as to press and/or suck said liquid from said reaction well (4) into said waste tank (13).

3. Cartridge (1) according to claim 1, **characterized in that** said at least one opening (10) comprises a closing element which may be moved from a closed position, where a flow of a liquid from the respective reaction well (4) to said waste tank (13) is prevented, to an open position allowing the flow of liquid from the respective reaction well (4) to said waste tank (13) by said actuation means.

4. Cartridge (1) according to claim 3, **characterized in that** said actuation means is an actuation peg coupled to said closing element and protruding from the housing (2) of said cartridge (1), said actuation peg being movable such as to move said closing element from said closed position into said open position and vice verca.

5. Method for emptying a liquid from at least one reaction well (4) of a cartridge (1) according to claim 1, said at least one reaction well (4) having at least one opening (10) arranged on a bottom surface (8) with which the reaction well (4) may be selectively brought into fluid communication with a waste tank (13) of said cartridge (1), comprising the steps of:
a) arranging the cartridge (1) on an area of a device (16) for automatically carrying out chemical or biological assays in a defined position and orientation; and
b) moving a fluid delivery tool (17) having at least one aperture (31) above said cartridge (1) by means of at least one actuator (18) of said device (16), such that said at least one aperture (31) is above said at least one reaction well (4), and
c) delivering at least a flow of gas through said aperture (31) into said reaction well (4) such as to blow out said liquid through said at least one opening (10) to said waste tank (13).

## Patentansprüche

1. Kartusche (1) mit einem Gehäuse (2) und zumindest einer, in einer Außenseite des Gehäuses (2) angeordneten Reaktionsmulde (4) für einen chemischen oder biologischen Assay, wobei die zumindest eine Reaktionsmulde (4) eine Unterseite (8) aufweist, die vorzugsweise mit zumindest einem chemischen oder biologischen Bindemittel beschichtet ist, das zur Bindung an eine Komponente zum Prüfen auf das Vorhandensein einer Komponente in einer Probe geeignet ist, wobei die Kartusche (1) ferner zumindest ein Vorratsgefäß (5, 6) umfasst, das im Gehäuse (2) angeordnet ist, wobei das zumindest eine Vorratsgefäß (5, 6) eine Reagenzlösung, Waschlösung und/oder Verdünnungslösung in einer zur Durchführung des Assays in der zumindest einen Reaktionsmulde (4) ausreichenden Menge umfasst, wobei die Anzahl der Vorratsgefäße (5, 6) der Kartusche (1) derart gewählt ist, dass alle Reagenzlösungen, Waschlösungen und/oder Verdünnungslösungen, die zur Durchführung des Assays in der zumindest einen Reaktionsmulde (4) benötigt werden, in der Kartusche (1) vorhanden sind, wobei die Kartusche (1) ferner einen Abfallbehälter (13) umfasst, der unter der zumindest einen Reaktionsmulde (4) angeordnet ist, wobei die zumindest eine Reaktionsmulde (4) zumindest eine Öffnung (10) an der Unterseite (8) umfasst, mit der die Reaktionsmulde (4) selektiv mit dem Abfallbehälter (13) in Fluidverbindung gebracht werden kann, vorzugsweise durch ein Betätigungsmittel, **dadurch gekennzeichnet, dass** die zumindest eine Öffnung (10) mit einem Kanal (12) verbunden ist, der zu dem zumindest einen Abfallbehälter (13) führt oder in diesen hinein ragt, wobei der Kanal (12) einen Ablauf (15) aufweist, der die Abgabe einer Flüssigkeit in den zumindest einen Abfallbehälter (13) erlaubt, wobei en Durchmesser des Kanals (12) von der Öffnung (10) zum Ablauf (15) zunimmt.

2. Kartusche (1) nach Anspruch 1, **dadurch gekennzeichnet, dass** die zumindest eine Öffnung (10) einen maximalen Durchmesser aufweist, der derart gewählt ist, dass eine Strömung einer Flüssigkeit durch die Öffnung (10) von der jeweiligen Reaktionsmulde (4) zum Abfallbehälter (13) durch eine Oberflächenspannung der Flüssigkeit verhindert wird und eine Strömung der Flüssigkeit durch Aufbringen eines Überdrucks in der Reaktionsmulde (4) und/oder eines Unterdrucks im Abfallbehälter (13), um die Flüssigkeit aus der Reaktionsmulde (4) in den Abfallbehälter (13) zu drücken und/oder zu saugen, ermöglicht werden kann.

3. Kartusche (1) nach Anspruch 1, **dadurch gekennzeichnet, dass** die zumindest eine Öffnung (10) ein Verschlusselement umfasst, das aus einer geschlossenen Stellung, in der eine Strömung einer Flüssigkeit aus der jeweiligen Reaktionsmulde (4) zum Abfallbehälter (13) verhindert wird, in eine offene Stellung, in der die Flüssigkeitsströmung aus der jeweiligen Reaktionsmulde (4) zum Abfallbehälter (13) erlaubt ist, durch das Betätigungsmittel bewegt werden kann.

4. Kartusche (1) nach Anspruch 3, **dadurch gekennzeichnet, dass** das Betätigungsmittel ein Betätigungszapfen ist, der mit dem Verschlusselement verbunden ist und vom Gehäuse (2) der Kartusche (1) vorragt, wobei der Betätigungszapfen beweglich ist, um das Verschlusselement aus der geschlossenen Stellung in die offene Stellung und umgekehrt zu bewegen.

5. Verfahren zum Entleeren einer Flüssigkeit aus zumindest einer Reaktionsmulde (4) einer Kartusche (1) nach Anspruch 1, wobei die zumindest eine Reaktionsmulde (4) zumindest eine an einer Unterseite (8) angeordnete Öffnung (10) aufweist, mit der die Reaktionsmulde (4) selektiv mit einem Abfallbehälter (13) der Kartusche (1) in Fluidverbindung gebracht werden kann, umfassend die folgenden Schritte:
a) Anordnen der Kartusche (1) an einem Bereich einer Vorrichtung (16) zur automatischen Durchführung chemischer oder biologischer Assays in einer vorgegebenen Definition und Orientierung; und
b) Bewegen eines Fluidabgabewerkzeugs (17) mit zumindest einer Öffnung (31) über der Kartusche (1) mit mindestens einem Betätigungselement (18) der Vorrichtung (16), so dass die zumindest eine Öffnung (31) sich über zumindest einer Reaktionsmulde (4) befindet, und
c) Abgeben zumindest einer Gasströmung durch die Öffnung (31) in die Reaktionsmulde (4), um die Flüssigkeit durch die zumindest eine Öffnung (10) in den Abfallbehälter (13) auszublasen.

## Revendications

1. Cartouche (1) ayant un boîtier (2) et au moins un puits de réaction (4) pour un dosage chimique ou un dosage biologique ménagé dans une surface extérieure dudit boîtier (2), ledit ou lesdits puits de réaction (4) ayant une surface inférieure (8), de préférence recouverte d'au moins un agent de liaison chimique ou biologique qui convient pour se lier à un composant pour doser la présence d'un composant dans une sonde, ladite cartouche (1) comprenant en outre au moins un récipient de stockage (5, 6) disposé dans ledit boîtier (2), dans laquelle ledit ou lesdits récipients de stockage (5, 6) comprennent une solution de réactif, une solution de lavage et/ou une solution de dilution en une quantité qui est suffisante pour réaliser le dosage dans ledit ou lesdits puits de réaction (4), le nombre de récipients de stockage (5, 6) de ladite cartouche (1) étant choisi de telle sorte que toutes les solutions de réactif, toutes les solutions de lavage et/ou toutes les solutions de dilution nécessaires pour réaliser le dosage dans ledit ou lesdits puits de réaction (4) soient présentes dans ladite cartouche (1), dans laquelle ladite cartouche (1) comprend en outre un réservoir de déchets (13) disposé en dessous dudit ou desdits puits de réaction (4), ledit ou lesdits puits de réaction (4) comprenant au moins une ouverture (10) sur la surface inférieure (8) avec laquelle le puits de réaction (4) peut être mis de manière sélective en communication fluidique avec ledit réservoir de déchets (13), de préférence par le biais d'un moyen d'actionnement, **caractérisée en ce que** ladite ou lesdites ouvertures (10) sont reliées à un conduit (12) menant vers ledit ou lesdits réservoirs de déchets (13), ou faisant saillie dans ces derniers, ledit conduit (12) ayant une sortie (15) permettant l'évacuation d'un liquide dans ledit ou lesdits réservoirs de déchets (13), dans laquelle un diamètre dudit conduit (12) augmente à partir de l'ouverture (10) vers ladite sortie (15).

2. Cartouche (1) selon la revendication 1, **caractérisée en ce que** la ou les ouvertures (10) présentent un diamètre maximal qui est sélectionné de telle sorte qu'un écoulement d'un liquide par ladite ouverture (10) depuis le puits de réaction respectif (4) jusqu'au dit réservoir de déchets (13) soit empêché par une tension superficielle dudit liquide et qu'un écoulement du liquide puisse être permis par application d'une surpression dans ledit puits de réaction (4) et/ou d'une sous-pression dans ledit réservoir de déchets (13), de sorte à presser et/ou à aspirer ledit liquide à partir dudit puits de réaction (4) dans ledit réservoir de déchets (13).

3. Cartouche (1) selon la revendication 1, **caractérisée en ce que** ladite ou lesdites ouvertures (10) comprennent un élément de fermeture qui peut être déplacé depuis une position fermée, où un écoulement de liquide depuis le puits de réaction respectif (4) jusqu'au dit réservoir de déchets (13) est empêché, jusqu'à une position ouverte permettant l'écoulement d'un liquide depuis le puits de réaction respectif (4) jusqu'au dit réservoir de déchets (13) par le biais dudit moyen d'actionnement.

4. Cartouche (1) selon la revendication 3, **caractérisée en ce que** ledit moyen d'actionnement est une cheville d'actionnement couplée au dit élément de fermeture et faisant saillie depuis le boîtier (2) de ladite cartouche (1), ladite cheville d'actionnement étant mobile de manière à déplacer ledit élément de fermeture depuis ladite position fermée dans ladite position ouverte et vice versa.

5. Procédé pour vider un liquide d'au moins un puits de réaction (4) d'une cartouche (1) selon la revendication 1, ledit ou lesdits puits de réaction (4) ayant au moins une ouverture (10) ménagée sur une surface inférieure (8) avec laquelle le puits de réaction (4) peut être mis de manière sélective en communication fluidique avec un réservoir de déchets (13) de ladite cartouche (1), comprenant les étapes consistant :
a) à disposer la cartouche (1) sur une zone d'un dispositif (16) pour réaliser automatiquement des dosages chimiques ou biologiques dans une position et une orientation définies ; et
b) à déplacer un outil de distribution de fluide (17) ayant au moins un orifice (31) au-dessus de ladite cartouche (1) au moyen d'au moins un actionneur (18) dudit dispositif (16) de telle sorte que ledit ou lesdits orifices (31) se trouvent au-dessus dudit ou desdits puits de réaction (4) et
c) à distribuer au moins un écoulement de gaz par ledit orifice (31) dans ledit puits de réaction (4) de telle manière à purger ledit liquide par ladite ou lesdites ouvertures (10) vers ledit réservoir de déchets (13) .
